# EUROPEAN PATENT SPECIFICATION

(11) **EP 2 104 608 B1**
(45) Date of publication and mention of the grant of the patent: **30.10.2019**
(21) Application number: 08701402.3
(22) Date of filing: 10.01.2008
(51) Int. Cl.: B32B 17/10, C03C 27/12, B32B 7/12, B32B 37/12, C09K 21/02, F41H 5/04

(54) **LAMINATED GLAZINGS**
VERBUNDVERGLASUNGEN
VITRAGES FEUILLETÉS

(30) Priority: 11.01.2007 GB 0700518
(43) Date of publication of application: 30.09.2009
(73) Proprietor: Pilkington Deutschland AG, 45884 Gelsenkirchen (DE)
(72) Inventor: WRUK, Norbert Eduard, 44799 Bochum (DE); JÄGER, Wolfgang, 58453 Witten (DE); POERSCH, Andreas, 45888 Gelsenkirchen (DE)
(74) Representative: Teasdale, Nicola Joanne
(86) International application number: PCT/EP2008/050256
(87) International publication number: WO 2008/084083

(56) References cited:
- EP-A- 1 577 276
- WO-A-2005/115746
- DE-C1- 19 916 506
- GB-A- 2 258 422
- US-A- 3 864 204
- US-A- 4 071 649
- US-A- 4 444 825
- US-A- 5 397 645

## Description

This invention relates to laminated glazings which exhibit intruder resistant and fire resistant properties.

Fire resistant glazings which provide not only integrity but also thermal insulation generally comprise laminated structures having at least two transparent panes and at least one fire resistant interlayer. The transparent panes are normally glass panes. The interlayer or interlayers must be optically clear and must remain clear without discolouration throughout the lifetime of the glazing. They must also function so as to improve the fire resistance of the glazing.

Similarly intruder and bullet resistant glazings generally comprise laminated structures having at least two transparent panes and at least one plastic interlayer. The transparent panes are normally glass panes although other transparent materials such as polycarbonates may be used. The interlayer or interlayers must be optically clear and must remain clear throughout the lifetime of the glazing. They must also function so as to improve the resistance of the glazing.

In many countries regulations exist specifying the fire resistance to be exhibited by a glazing intended for use in a particular location. Generally these regulations specify either a minimum time for which the glazing must form a barrier to the propagation of a flame when one side of the glazing is exposed to a fire and/or a minimum time for which the temperature and/or the intensity of radiated heat on the side of the glazing which is not exposed to the fire must remain below a specified figure. Glass panes will not meet any or all of these requirements and the fire resistant glazings which have been developed are laminated glazings having at least one interlayer between at least two opposed glass panes.

Similarly in many countries regulations exist specifying the degree of intruder resistance to be exhibited by a glazing intended for use in a particular location. Separate regulations address different types of intrusion. For example in Europe EN 356 relates to testing and classification of resistance against manual attack and EN 1063 relates to testing and classification of resistance against bullet attack.

One type of interlayer which has been developed for use in fire resistant laminates is based upon an alkali metal silicate waterglass. These silicate interlayers intumesce upon exposure to heat to form an opaque foam. The foam serves to assist the retention of the glass panes and acts as a barrier to radiant heat.

One method for forming a silicate based interlayer is to pour a waterglass solution on to the surface of a glass pane and dry the solution under controlled conditions to form a thin layer on the glass. A second pane may be placed on top of the dried interlayer to form a fire resistant glazing. Such processes are in use in the production of fire resistant glazings such as those sold by the Pilkington Group of companies under its trade marks PYROSTOP and PYRODUR

A variety of plastic interlayers have been developed for use in intruder resistant glazings. One of the most common is the poly vinyl acetals and in particular polyvinyl butyral (hereinafter for convenience PVB) which is widely used in the production of laminated glazings used in building and in automobiles. Another type of plastic interlayer are the engineered polymers such as that sold by the Du Pont Company under its trade mark Sentry Glass Plus which offer a higher degree of intruder resistance.

These intruder resistant laminates may be formed by laminating at elevated temperature and pressure in an autoclave.

EP 1 577 276 describes a glazing panel having dimensions of at least 40 cm by 30 cm and a mechanical resistance rating of at least 2B2 in a pendulum test according to European standard EN 12600 comprises a first glass sheet having a thickness within the range 1.5 mm to 14 mm, a second glass sheet having a thickness within the range 1.5 mm to 14 mm, spaced from the first glass sheet and an interlayer adhered between the first and second glass sheets so as to form a laminated assembly, the interlayer having a maximum heat release rate of less than 650 kW/m.

WO 2005/115746 describes glazing panels comprising a complex assembly of glass sheets and intumescent layers, such as hydrated alkaline silicates. It is stated that the glazing panels are produced such as to have high fire performance ratings, while total thickness is maintained within acceptable limits and production is carried out under economically-sustainable conditions. For said purpose, the thickness of the intumescent layers must be between 1.4 and 2 mm. In addition, the thickness of the glass sheets must also meet various different requirements depending on the number of sheets used in the structure.

DE 199 16 506 describes fire protection glass consisting of at least 3 panes of glass and at least 2 fire-inhibiting interlayers of hydrated alkali silicate. The fire protection glass comprises at least 2 primary products, each with a 1.5-2.6 mm thick pane of glass and a 0.5-1.0 mm thick fire-inhibiting layer, bonded by at least 1 of the fire-inhibiting layers to another 1-2.6 mm thick pane of glass.

There are situations in which it is either desirable or necessary to install a glazing which exhibits both fire resistant and intruder resistant properties. The demand for such glazings has been met by supplying Insulated Glass Units (hereinafter for convenience IGU's) which have a fire resistant laminate as one pane and an intruder resistant laminate as the other. These IGU's are thick and heavy and thereby not suitable for use in all locations.

We have now discovered that laminated glazings which exhibit both fire resistant and intruder resistant properties and which are thinner and lighter than the known IGU's by forming a laminate comprising at least three transparent plies with at least one fore resistant interlayer and at least one intruder resistant plastic interlayer wherein the total thickness of the plastic interlayers is at least 2.5mm. Surprisingly these laminates may exhibit a higher degree of intruder resistance than an IGU comprising two separate laminated panes comprising the same interlayers.

Accordingly from a first aspect this invention provides a laminated glazing which comprises:
at least 4 transparent plies separated by at least three transparent interlayers;
characterised in that:
   at least one of said interlayers is an intumescent fire resistant material; and
   at least two of said interlayers are a plastic interlayer; and wherein
   one of said at least two plastic interlayers comprises a polyvinyl acetal; and
   one of said at least two plastic interlayers comprises a cured resin; and wherein the at least one cured resin plastic interlayer is located between a first ply which is adjacent to a fire resistant interlayer and a second ply which is adjacent to a plastic interlayer; and wherein the total thickness of the plastic interlayers is at least 2.5mm.

The preferred intumescent fire resistant materials for use in the present invention comprise an alkali metal silicate waterglass. The preferred alkali metal waterglasses for use in the production of the interlayers of this invention are sodium and potassium silicate waterglasses. Any of the sodium silicate waterglasses which are known for use in the art may be used in this invention. The sodium silicates may be those wherein the weight ratio of SiO₂:Na₂O is at least 1.6:1 and preferably is in the range 2.0:1 to 6.0:1 more usually in the range 2.0:1 to 4.0:1 The known glazings have generally been based upon commercially available sodium silicate waterglass solutions wherein the weight ratio of SiO₂:Na₂O is either 2.5:1, 2.85:1, 3.0:1 or 3.3:1.

Potassium silicate and lithium silicate waterglasses may also be used to produce the interlayers of the present invention. In general they will be used as a partial replacement for the sodium silicate waterglass and the molar ratio of sodium ions to the total of potassium and/or lithium ions is at least 2:1 Where a potassium silicate waterglass is used it is preferably one in which the ratio of SiO₂:K₂O is in the range 1.4:1 to 2.5:1.

In a particularly preferred embodiment the alkali metal silicate waterglass used to produce the interlayers of this invention comprises a mixture of a sodium silicate with a potassium silicate wherein the molar ratio of sodium ions to potassium ions is at least 4:1

The solutions used to produce the interlayers of this invention may further comprise one or more polyhydric compounds which are used in the production of the known interlayers. Polyhydric compounds which have been proposed for use include glycerol, a derivative of glycerine or a mono or polysaccharide in particular a sugar. The most commonly used polyhydric compound and the preferred compound for use in the present invention is glycerol.

One method for the production of a solid intumescent interlayer is to dry these solutions under carefully controlled conditions until the water content is reduced to a value in the range 10 to 35 % by weight. Another type of process by which the intumescent interlayers may be formed is a cast in place process. Such processes are described for example in USP 5565273 and USP 5437902 and comprise the introduction of a solution comprising an alkali metal silicate and a curing agent between two opposed glass panes and curing the solution to form an interlayer. The interlayers produced by these processes typically comprise from 40 to 60 % by weight of water. They may also contain an increased proportion of polyhydric compound typically up to 30% by weight.

Yet another type of process involves forming a foil by drying a silicate solution on a flat bed or film and laminating that foil between two glass plies. Processes of this type are described in EP1274569, GB 2395943, EP 1606109 and WO 2004054800.

The plastic interlayer material is preferably a poly vinyl acetal and is most preferably polyvinylbutyral. PVB is commonly used as an interlayer in safety glass and is widely available as an article of commerce. PVB films are available in a variety of thicknesses including 0.38mm, 0.76mm and 3.0mm.

A second preferred plastic interlayer material is the ionomer resins of the type which are described in EP 1105287.

The laminated glazings of this invention preferably comprise from 4 to 10 plies of transparent material. Increasing the number of plies increases the performance of the glazing in both fire resistance and intruder resistance. These higher performances require a thicker heavier glazing which is more costly. The number of plies in a glazing will normally be the minimum number which is required to achieve the desired level of performance. In a preferred embodiment the glazings of this invention comprise at least four transparent plies separated by at least three transparent interlayers wherein at least two of the interlayers comprise a plastic material and at least one interlayer comprises an intumescent fire resistant material.

The incorporation of at least one and preferably from 1 to 3 interlayers formed from a plastic material is required in order to produce a glazing having the desired level of intruder resistance and in particular of bullet resistance. Preferably the glazing comprises a single interlayer formed from a plastic material.

In a preferred embodiments the glazing comprises a single interlayer which is comprises a plastic material which interlayer is at least 3.0mm thick.

The incorporation of from 1 to 8 interlayers comprising an intumescent fire resistant material is preferred in the glazings of this invention in order to produce a glazing having a desired degree of intruder resistance and fire resistance. In general the fire resistance performance will be similar to that provided by a laminated glazing comprising the same number of fire resistant interlayers in the absence of the intruder resistant plastic interlayer. However the intruder resistance and in particular the bullet resistance of the glazing is enhanced compared to the performance provided by a comparable laminated glazing comprising the same number of plastic interlayers. Without wishing to be bound by any theory Applicants believe that the fire resistant interlayers serve to absorb and dissipate the energy which impacts the glazing during an attack by an intruder. This enables that part of the laminate comprising the plastic interlayer to function more effectively.

In a preferred embodiment of the invention the laminated glazings comprise from 1 to 3 fire resistant interlayers. Such laminates provide a degree of fire resistance which enables them to be used in a wide variety of locations.

The thickness of the fire resistant interlayers will be similar to that used in known fire resistant glazings. Typically the interlayers will be from 1mm to 2 mm thick. In glazings which comprise more than one fire resistant interlayer the interlayers will preferably be of uniform thickness.

The transparent plies used in the glazings of this invention will preferably be glass plies. The glass panes are preferably float glass panes having a thickness of from 2.0 to 8.0mm. The panes may have a heat reflective coating upon at least one surface. Glass panes having such a coating are well known in the art and are available as articles of commerce. One example of a coated glass which may be used is the low emissivity glass sold by the Pilkington Group under its trade mark K Glass. Preferably the float glass panes are toughened glass panes. The panes may also be formed from borosilicate glasses or from ceramic glasses such as those sold by the Nippon Electric Glass Company under the Trade Mark FIRELITE.

The glass plies need not be of uniform thickness. In the preferred embodiments those plies which are adjacent to a plastic interlayer may be from 3.0mm to 4.0mm thick. The plies which are adjacent to a fire resistant interlayer may be thinner and are preferably from 2.0mm to 3.0mm thick.

The laminated glazings of the invention are preferably constructed so that at one of the plies which is adjacent to a plastic interlayer is one of the two outermost plies. Where the glazing comprises more than one plastic interlayer it is preferred that these interlayers are separated only by one or more transparent plies. Where the glazing comprises more than one fire resistant interlayer it is preferred that these interlayers are separated from at least one other fire resistant interlayer only by one or more transparent plies.

In another preferred embodiment the laminated glazings of this invention comprise at least one and most preferably only one transparent interlayer which is formed by curing a resin at or near room temperature. Examples of useful resins include epoxy resins, acrylic resins and.polyurethane resins.

Such resin based interlayers are preferably formed between a first ply which is adjacent to a fire resistant interlayer and a second ply which is adjacent to a plastic interlayer.

The incorporation of the resin based interlayer is advantageous in that it can facilitate the production of the laminated glazings. Specifically a sub assembly comprising at least two glass panes and at least one fire resistant interlayer can be formed using the techniques which are conventionally used to form a fire resistant glazing. A further subassembly comprising at least two glass panes and at least one plastic interlayer may be formed using techniques which are conventionally used to form safety glazings. These two sub assemblies may be positioned end to end and a seal placed around there adjacent perimeters so as to define a closed space between their adjacent faces. An uncured resin is introduced into that space in a manner which fills the space. The resin is then cured to form the interlayer. This method of production is advantageous in that the two laminated sub assemblies may be formed using known conditions and neither is exposed to the conditions e.g. of temperature and pressure which are used to form the other. In a preferred embodiment the resin is a resin which can be cured at ambient temperature or at a temperature which is near to ambient temperature.

Thus from a second aspect this invention provides a method for the production of a laminated glazing which comprises at least four glass panes, at least one fire resistant interlayer and at least one plastic interlayer which comprises forming a first laminated sub assembly comprising at least two glass panes and at least one fire resistant interlayer, forming a second laminated sub assembly comprising at least two glass panes and at least one plastic interlayer, placing the first and second sub assemblies adjacent to one another and placing a seal around their perimeters so as to define a cavity between their opposed faces, filling said cavity with a resin and curing said resin to form a transparent plastic interlayer.

The total thickness of the laminated glazings of this invention is preferably less than 50mm. The total thickness is preferably in the range 15mm to 45mm.

In use the glazings of the present invention need to be installed in a suitable frame in order to achieve the optimum properties. In particular larger glazings need to be installed in a high quality frame in order to ensure that the desired endurance ratings are reliably achieved. Such frame structures are known in the art and are not described in this application.

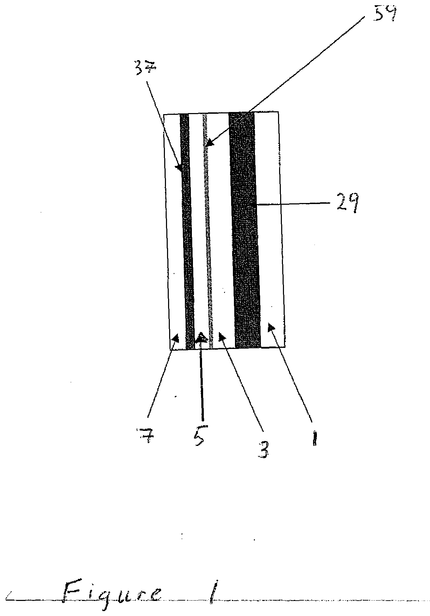

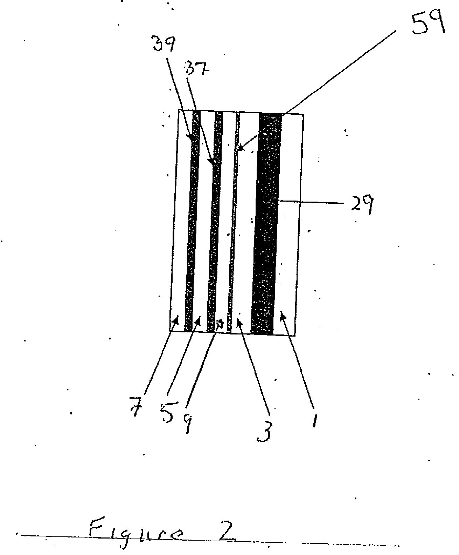

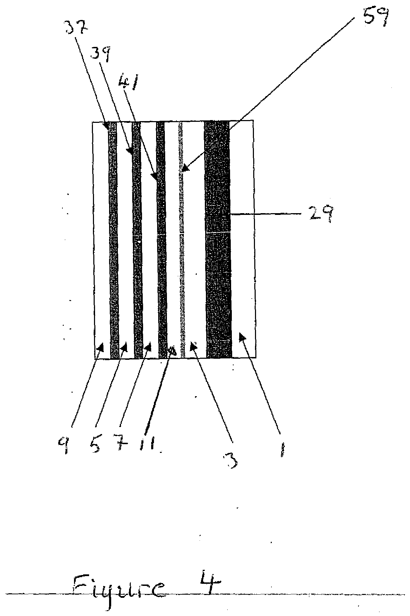

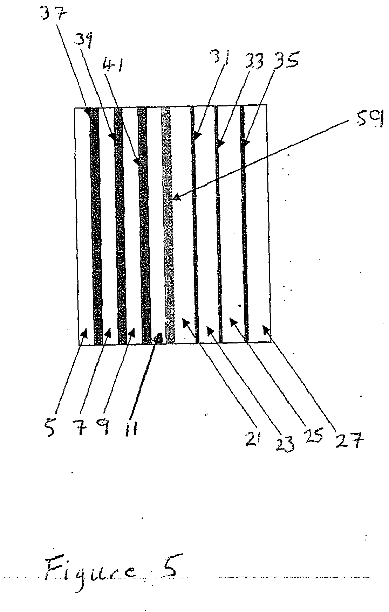

The present invention will now be described with reference to the accompanying drawings in which Figures 1 to 6 are cross sections through six separate glazings.

In these Figures the numerals 1 and 3 denote float glass panes having a thickness of 3mm; the numerals 5, 7, 9, 11, 13, 15, 17 and 19 denote float glass panes having a thickness of 2.6mm and the numerals 21, 23, 25 and 27 denotes a float glass pane having a thickness of 4mm. The number 29 denotes a PVB interlayer having a thickness of 3.04mm and the numerals 31, 33 and 35 denote PVB interlayers having a thickness of 0.76mm. The numerals 37, 39 and 41 denote sodium silicate waterglass interlayers having a thickness of 1.4mm and the numerals 43, 45, 47, 49, 51, 53, 55 and 57 denote sodium silicate waterglass interlayers having a thickness of 1.6mm. The number 59 denote a resin interlayer having a thickness of 1.5mm.

The waterglass interlayers were produced in a conventional manner by pouring an initial mixture comprising a sodium silicate waterglass onto a glass pane of the appropriate thickness and drying the solution so as to form the interlayer. The PVB interlayers were also produced in a conventional manner by placing a sheet or sheets of PVB of the appropriate thickness between two or more glass panes and subjecting the assembly thus formed to heat and pressure in an autoclave.

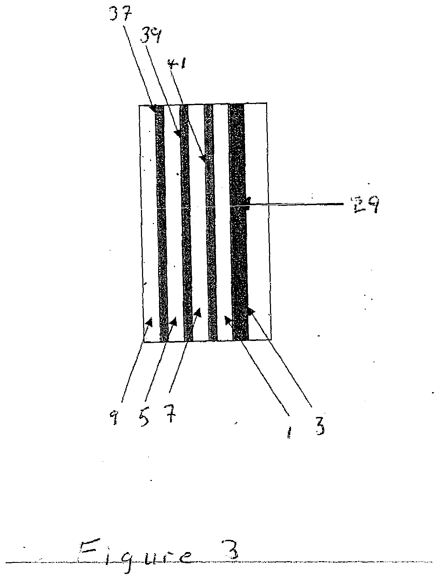

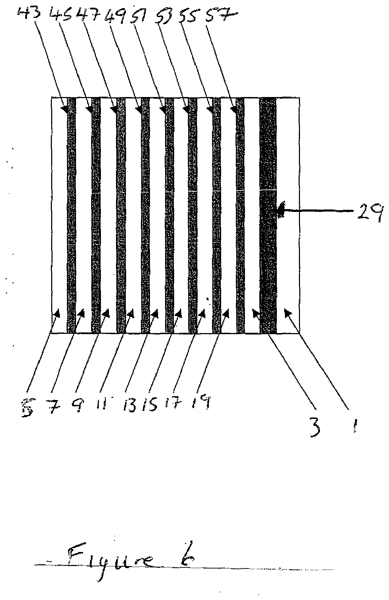

The laminated glazings of Figures 3 and 6 were produced by assembly of the components and treating said assembly to heat and pressure in an autoclave. The laminated glazings of Figures 1, 2, 4 and 5 were produced by forming two subassemblies comprising the waterglass interlayers and the PVB interlayers, placing those sub assemblies adjacent to one another and placing a seal around their adjacent perimeters thereby defining a closed space between their adjacent faces. A resin was then introduced into that enclosed space and cured using UV light to catalyse said curing step.

The glazings of Figures 1 to 6 were subjected to testing according to EN 356 and EN 1063. The results are shown in Table 1.

| Glazing | EN 356 | EN 1063 |
|---|---|---|
| Figure 1 | Passed P6B | |
| Figure 2 | Passed P6B | Passed BR2 |
| Figure 3 | Passed P6B | |
| Figure 4 | Passed P7B | Passed BR3 |
| Figure 5 | Passed P8B | Passed BR4 |
| Figure 6 | Passed P6B | Passed BR 5 |

## Claims

1. A laminated glazing which comprises:
at least 4 transparent plies separated by at least three transparent interlayers;
**characterised in that**:
at least one of said interlayers is an intumescent fire resistant material; and
at least two of said interlayers are a plastic interlayer; and wherein
one of said at least two plastic interlayers comprises a polyvinyl acetal; and
one of said at least two plastic interlayers comprises a cured resin; and wherein the at least one cured resin plastic interlayer is located between a first ply which is adjacent to a fire resistant interlayer and a second ply which is adjacent to a plastic interlayer; and wherein the total thickness of the plastic interlayers is at least 2.5mm.

2. A glazing according to claim 1 which comprises from 4 to 10 transparent plies.

3. A glazing according to claim 1 or 2 which comprises from 1 to 8 interlayers which comprise an intumescent fire resistant material.

4. A glazing according to claim 3 which comprises more than one fire resistant interlayer each separated from at least one other fire resistant interlayer by a single ply of transparent material.

5. A glazing according to claim 1 **characterised in that** the thickness of each of the fire resistant interlayers is from 1.0mm to 2.0mm; or wherein the thickness of each of the fire resistant interlayers is substantially the same as the others.

6. A glazing according to any preceding claim **characterised in that** the transparent plies are glass plies, with a thickness of from 2.5mm to 8.0mm

7. A glazing according to claim 6 **characterised in that**:
a) the thickness of the glass plies which are adjacent to a plastic interlayer is from 3.0mm to 4.0mm; and/or
b) the thickness of the glass plies which are not adjacent to a plastic interlayer is from 2.0mm to 3.0mm.

8. A glazing according to any of the preceding claims **characterised in that** the curable resin interlayer is curable at or near room temperature.

9. A glazing according to any of the preceding claims **characterised in that** the total thickness of the laminate is less than 50mm; or wherein the total thickness of the laminate is from 15mm to 45mm.

10. A glazing according to any of claims 1 to 9 **characterised in that** at least one of the at least two plastic interlayers, has a thickness of at least 2.5mm.

11. A glazing according to any of claims 1 to 9 **characterised in that** at least one of the at least two plastic interlayers, has a thickness of at least 3.0mm.

12. A glazing according to any of the preceding claims in which one of the two outermost plies in the glazing is adjacent to a plastic interlayer.

13. A method for the production of a laminated glazing which comprises at least four glass panes, at least one fire resistant interlayer and at least one plastic interlayer which comprises forming a first laminated sub assembly comprising at least two glass panes and at least one fire resistant interlayer, forming a second laminated sub assembly comprising at least two glass panes and at least one plastic interlayer, placing the first and second sub-assemblies adjacent to one another and placing a seal around their perimeters so as to define a cavity between their opposed faces, filling said cavity with a resin and curing said resin to form a transparent resin interlayer.

14. A method according to claim 13 **characterised in that** the resin is cured at ambient temperature.

15. A method according to either of claims 13 or 14 **characterised in that** the resin is selected from the group comprising epoxy resins, acrylic resins and polyurethane resins.

## Patentansprüche

1. Verbundverglasung mit:
mindestens 4 transparenten Lagen, die durch mindestens drei transparente Zwischenschichten getrennt sind;
**dadurch gekennzeichnet, dass**:
mindestens eine der Zwischenschichten ein intumeszierendes brandhemmendes Material ist; und
mindestens zwei der Zwischenschichten eine Kunststoffzwischenschicht sind; dass
eine der mindestens zwei Kunststoffzwischenschichten ein Polyvinylacetal umfasst; und dass
eine der mindestens zwei Kunststoffzwischenschichten ein gehärtetes Harz umfasst; wobei die mindestens eine Kunststoffzwischenschicht aus gehärtetem Harz zwischen einer ersten Lage, die an eine brandhemmende Zwischenschicht angrenzt, und einer zweiten Lage, die an eine Kunststoffzwischenschicht angrenzt, angeordnet ist;
und wobei die Gesamtdicke der Kunststoffzwischenschichten mindestens 2,5 mm beträgt.

2. Verglasung nach Anspruch 1, die 4 bis 10 transparente Lagen umfasst.

3. Verglasung nach Anspruch 1 oder 2, die 1 bis 8 Zwischenschichten umfasst, die ein intumeszierendes brandhemmendes Material umfassen.

4. Verglasung nach Anspruch 3, die mehr als eine feuerfeste Zwischenschicht umfasst, die jeweils durch eine einzelne Lage aus transparentem Material von mindestens einer anderen feuerfesten Zwischenschichtgetrennt ist.

5. Verglasung nach Anspruch 1, **dadurch gekennzeichnet, dass** die Dicke jeder der brandhemmenden Zwischenschichten von 1,0 mm bis 2,0 mm beträgt; oder die Dicke jeder der brandhemmenden Zwischenschichten im Wesentlichen die gleiche wie die anderen ist.

6. Verglasung nach einem der vorhergehenden Ansprüche, **dadurch gekennzeichnet, dass** die transparenten Lagen Glaslagen mit einer Dicke von 2,5 mm bis 8,0 mm sind.

7. Verglasung nach Anspruch 6, **dadurch gekennzeichnet, dass**:
a) die Dicke der Glaslagen, die an eine Kunststoffzwischenschicht angrenzen, von 3,0 mm bis 4,0 mm beträgt; und/oder
b) die Dicke der Glaslagen, die nicht an eine Kunststoffzwischenschicht angrenzen, von 2,0 mm bis 3,0 mm beträgt.

8. Verglasung nach einem der vorhergehenden Ansprüche, **dadurch gekennzeichnet, dass** die Zwischenschicht aus härtbarem Harz bei oder nahe der Raumtemperatur härtbar ist.

9. Verglasung nach einem der vorhergehenden Ansprüche, **dadurch gekennzeichnet, dass** die Gesamtdicke des Laminats weniger als 50 mm beträgt; oder dass die Gesamtdicke des Laminats zwischen 15 mm und 45 mm liegt.

10. Verglasung nach einem der Ansprüche 1 bis 9, **dadurch gekennzeichnet, dass** mindestens eine der mindestens zwei Kunststoffzwischenschichten eine Dicke von mindestens 2,5 mm aufweist.

11. Verglasung nach einem der Ansprüche 1 bis 9, **dadurch gekennzeichnet, dass** mindestens eine der mindestens zwei Kunststoffzwischenschichten eine Dicke von mindestens 3,0 mm aufweist.

12. Verglasung nach einem der vorhergehenden Ansprüche, bei der eine der beiden äußersten Lagen in der Verglasung an eine Kunststoffzwischenschicht angrenzt.

13. Verfahren zur Herstellung einer Verbundglasscheibe, die mindestens vier Glasscheiben, mindestens eine brandhemmende Zwischenschicht und mindestens eine Kunststoffzwischenschicht umfasst, umfassend das Bilden einer ersten Verbundunterbaugruppe, die mindestens zwei Glasscheiben und mindestens eine brandhemmende Zwischenschicht umfasst, das Bilden einer zweiten Verbundunterbaugruppe, die mindestens zwei Glasscheiben und mindestens eine Kunststoffzwischenschicht umfasst, das Anordnen der ersten und zweiten Unterbaugruppen nebeneinander und das Anbringen einer Dichtung um ihren Umfang herum, um einen Hohlraum zwischen ihren einander gegenüberliegenden Flächen zu definieren, Füllen des Hohlraums mit einem Harz und Aushärten des Harzes, um eine transparente Kunststoffzwischenschicht zu bilden.

14. Verfahren nach Anspruch 13, **dadurch gekennzeichnet, dass** das Harz bei Umgebungstemperatur gehärtet wird.

15. Verfahren nach einem der Ansprüche 13 oder 14, **dadurch gekennzeichnet, dass** das Harz ausgewählt ist aus der Gruppe, die Epoxidharze, Acrylharze und Polyurethanharze umfasst.

## Revendications

1. Vitrage feuilleté qui comprend :
au moins 4 couches transparentes séparées par au moins trois couches intermédiaires transparentes ;
**caractérisé en ce que** :
au moins l'une desdites couches intermédiaires est une matière ignifuge intumescente ; et
au moins deux desdites couches intermédiaires sont une couche intermédiaire en plastique ; et dans lequel
l'une desdites au moins deux couches intermédiaires en plastique comprend un polyacétal de vinyle ; et
l'une desdites au moins deux couches intermédiaires en plastique comprend une résine durcie ; et dans lequel l'au moins une couche intermédiaire en plastique à résine durcie est située entre une première couche qui est adjacente à une couche intermédiaire ignifuge et une seconde couche qui est adjacente à une couche intermédiaire en plastique ; et dans lequel l'épaisseur totale des couches intermédiaires en plastique est d'au moins 2,5 mm.

2. Vitrage selon la revendication 1, qui comprend 4 à 10 couches transparentes.

3. Vitrage selon la revendication 1 ou 2, qui comprend 1 à 8 couches intermédiaires qui comprennent une matière ignifuge intumescente.

4. Vitrage selon la revendication 3, qui comprend plus d'une couche intermédiaire ignifuge, chacune étant séparée d'au moins une autre couche intermédiaire ignifuge par une couche unique de matière transparente.

5. Vitrage selon la revendication 1, **caractérisé en ce que** l'épaisseur de chacune des couches intermédiaires ignifuges est de 1,0 mm à 2,0 mm ; ou dans lequel l'épaisseur de chacune des couches intermédiaires ignifuges est sensiblement la même que les autres.

6. Vitrage selon une quelconque revendication précédente, **caractérisé en ce que** les couches transparentes sont des couches de verre, ayant une épaisseur de 2,5 mm à 8,0 mm.

7. Vitrage selon la revendication 6, **caractérisé en ce que** :
a) l'épaisseur des couches de verre qui sont adjacentes à une couche intermédiaire en plastique est de 3,0 mm à 4,0 mm ; et/ou
b) l'épaisseur des couches de verre qui ne sont pas adjacentes à une couche intermédiaire en plastique est de 2,0 mm à 3,0 mm.

8. Vitrage selon l'une quelconque des revendications précédentes, **caractérisé en ce que** la couche intermédiaire à résine durcissable est durcissable à température ambiante ou à une température proche de celle-ci.

9. Vitrage selon l'une quelconque des revendications précédentes, **caractérisé en ce que** l'épaisseur totale du feuilletage est inférieure à 50 mm ; ou dans lequel l'épaisseur totale du feuilletage est de 15 mm à 45 mm.

10. Vitrage selon l'une quelconque des revendications 1 à 9, **caractérisé en ce qu'**au moins l'une desdites au moins deux couches intermédiaires en plastique a une épaisseur d'au moins 2,5 mm.

11. Vitrage selon l'une quelconque des revendications 1 à 9, **caractérisé en ce qu'**au moins l'une desdites au moins deux couches intermédiaires en plastique a une épaisseur d'au moins 3,0 mm.

12. Vitrage selon l'une quelconque des revendications précédentes, dans lequel l'une des deux couches les plus externes du vitrage est adjacente à une couche intermédiaire en plastique.

13. Procédé de production d'un vitrage feuilleté qui comprend au moins quatre panneaux de verre, au moins une couche intermédiaire ignifuge et au moins une couche intermédiaire en plastique, qui comprend la formation d'un premier sous-ensemble feuilleté comprenant au moins deux panneaux de verre et au moins une couche intermédiaire ignifuge, la formation d'un second sous-ensemble feuilleté comprenant au moins deux panneaux de verre et au moins une couche intermédiaire en plastique, le placement des premier et second sous-ensembles adjacents l'un à l'autre et le placement d'un joint autour de leurs périmètres afin de définir une cavité entre leurs faces opposées, le remplissage de ladite cavité avec une résine et le durcissement de ladite résine pour former une couche intermédiaire en résine transparente.

14. Procédé selon la revendication 13, **caractérisé en ce que** la résine est durcie à température ambiante.

15. Procédé selon l'une ou l'autre des revendications 13 ou 14, **caractérisé en ce que** la résine est sélectionnée parmi le groupe comprenant les résines époxy, les résines acryliques et les résines de polyuréthane.
